(19) Europäisches Patentamt
European Patent Office
Office européen des brevets

(11) **EP 2 119 609 A1**

(12) **EUROPEAN PATENT APPLICATION**
published in accordance with Art. 153(4) EPC

(43) Date of publication:
**18.11.2009 Bulletin 2009/47**

(51) Int Cl.:
***B60T 8/1761*** (2006.01)

(21) Application number: **08710979.9**

(22) Date of filing: **08.02.2008**

(86) International application number:
**PCT/JP2008/052100**

(87) International publication number:
**WO 2008/096843 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.02.2007 JP 2007030390**

(71) Applicant: **Bosch Corporation**
**Shibuya-ku**
**Tokyo 150-8360 (JP)**

(72) Inventors:
• **OGAWA, Takahiro**
**Yokohama-shi**
**Kanagawa 224-8501 (JP)**
• **WESTERFELD, Helge**
**Yokohama-shi**
**Kanagawa 224-8501 (JP)**

(74) Representative: **Knapp, Thomas**
**Dreiss Patentanwälte**
**Postfach 10 37 62**
**70032 Stuttgart (DE)**

(54) **BRAKE CONTROL DEVICE FOR TWO-WHEELED MOTOR VEHICLE**

(57)   The invention aims at providing a brake control device for a two-wheeled motor vehicle which can detect a hydraulic pressure of a wheel cylinder, determine release of a brake lever, and terminate an antilock brake system (ABS).

The brake control device of the invention includes a brake lever 101, a master cylinder 103 connected to the brake lever, a wheel cylinder 115 to which the pressure of the master cylinder 103 is transmitted, a wheel speed sensor that detects the speed of the wheel, a pressure sensor 127 that detects the pressure of the wheel cylinder 115, a hydraulic unit 100 that is disposed between the master cylinder 103 and the wheel cylinder 115, and an ECU that actuates, on the basis of the wheel speed that the wheel speed sensor has detected, the hydraulic unit 100 at a time when there is a tendency for the wheel to lock. In the case where the wheel cylinder is not eased up during operation of the hydraulic unit 100 and the pressure detected by the pressure sensor 117 has dropped to a predetermined value at a time when a predetermined amount of time has elapsed in a state where the wheel cylinder 115 is not eased up, operation of the hydraulic unit 100 is terminated.

*FIG. 3*

EP 2 119 609 A1

**Description**

TECHNICAL FIELD

The present invention relates to a brake control device for a two-wheeled motor vehicle and more particularly relates to a brake control device that detects the timing of release of a brake lever and terminates ABS control.

BACKGROUND ART

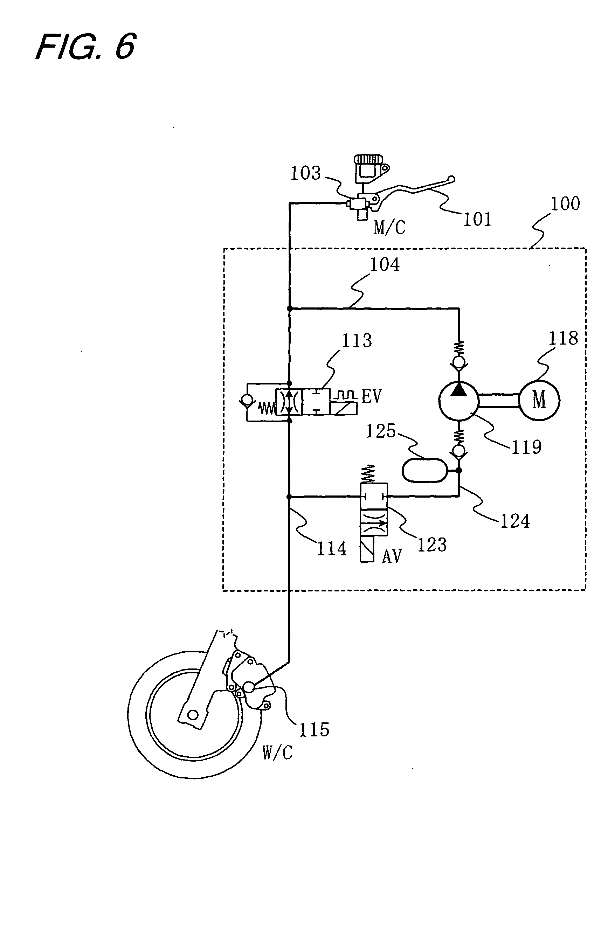

Antilock brake systems (ABS) have come to be applied as brake control for two-wheeled motor vehicles. An ABS is ordinarily configured by a wheel speed sensor, control means such as an electronic control unit (ECU), and a hydraulic unit, and there are also cases where an ABS includes an acceleration sensor and a pressure sensor. A brake control device for a two-wheeled motor vehicle equipped with such an ABS is shown in a hydraulic circuit in FIG. 6 and will be described. The hydraulic circuit shown in FIG. 6 is only the front wheel hydraulic circuit, but the rear wheel hydraulic circuit is the same except that a brake lever in the front wheel hydraulic circuit is changed to a brake pedal, so illustration and description of the rear wheel hydraulic circuit will be omitted.

The front wheel hydraulic circuit in FIG. 6 is configured by a brake lever 101 that is operated by a rider, a master cylinder (M/C) 103 that is connected to the brake lever 101, a conduit 104 that is connected to the master cylinder 103, an in valve (EV) 113 that is connected to the conduit 104 and is a normally open electromagnetic valve, a conduit 114 that is connected to the in valve 113, and a wheel cylinder (W/C) 115 that is connected to the conduit 114 and actuates a front wheel brake. Moreover, a pressure reducing valve (AV) 123 that is a normally closed electromagnetic valve is connected to the conduit 114. Further, a conduit 124 is connected to the pressure reducing valve 123, and a reservoir 125 is connected to the conduit 124. Moreover, an inlet port of a hydraulic pump 119 is connected via a check valve to the conduit 124, and an outlet port of the hydraulic pump 119 is connected via a check valve to the conduit 104. The hydraulic pump 119 is driven by a DC motor 118. In FIG. 6, reference numeral 100 represents a hydraulic unit.

Moreover, in the hydraulic circuit in FIG. 6, the hydraulic unit 100 is actuated when, at the time of operation of the brake lever 101, an unillustrated electronic control unit (ECU) detects a tendency of the front wheel to lock from the front wheel speed that is detected by an unillustrated front wheel speed sensor disposed in the front wheel.

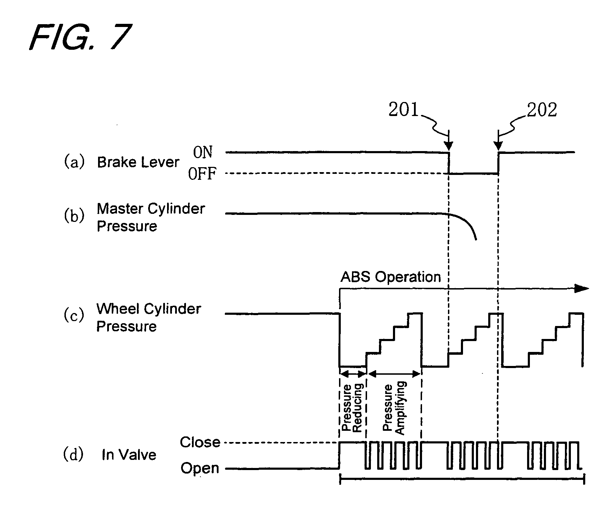

In this case, the ECU closes the in valve 113, opens the pressure reducing valve 123 and allows the hydraulic pressure of the wheel cylinder 115 to escape to the reservoir 125 to thereby lower the hydraulic pressure of the wheel cylinder 115 and avoid front wheel lock. Next, the ECU performs pressure reducing operation and pressure amplifying operation several times as shown in later-mentioned FIG. 7(c). Hereinafter, "pressure amplifying operation" will mean operation that is configured by amplification and holding of the pressure of the wheel cylinder 115 and in which the pressure rises in stages as shown in FIG. 7(c). During this pressure amplifying operation, the ECU repeats amplification and holding of the pressure of the wheel cylinder 115. At the time of pressure amplification, the ECU opens the in valve 113, closes the pressure reducing valve 123 and actuates the hydraulic pump 119 to thereby suck out brake fluid from the reservoir 125 and send the brake fluid to the wheel cylinder 115 via the conduit 104, the opened in valve 113 and the conduit 114. At the time of holding, the ECU closes both the in valve 113 and the pressure reducing valve 123 and holds the wheel cylinder pressure at a constant.

The operating state of each member will be described in greater detail using FIG. 7. FIG. 7(a) shows actual ON and OFF states of the brake lever 101 that is operated by the rider. FIG. 7(a) shows that at the outset of front wheel brake operation, the rider grips the brake lever 101 and applies the brake (ON), then the rider releases the brake lever at the point in time represented by arrow 201 (OFF), and then the rider again grips the brake lever at the point in time represented by arrow 202 (ON).

FIG. 7(b) shows the change over time in the pressure of the master cylinder 103 and temporally corresponds to FIG. 7(a). The master cylinder 103 is connected to the brake lever 101, so as shown in FIG. 7(b), in a state where the brake lever 101 is initially gripped, the pressure of the master cylinder 103 is high but smoothly drops in accompaniment with release of the brake lever (arrow 201). FIG. 7(c) shows the pressure of the wheel cylinder 115. FIG. 7(c) shows that before the rider initially releases the brake lever 101, that is, at a point in time before arrow 201, the ABS is operating. The ECU drives the hydraulic pump 119 and opens and closes each of the valves 113 and 123 to thereby alternately repeat pressure reducing operation and pressure amplifying operation of the wheel cylinder 115 as shown in FIG. 7(c). FIG. 7(d) shows opening and closing operation of the in valve 113, and the pressure of the wheel cylinder 115 at time of ABS operation is amplified in a state where the ECU has opened in valve 113. Further, the pressure of the wheel cylinder 115 is reduced by opening the pressure reducing valve 123. Further, when the ECU closes both the in valve 113 and the pressure reducing valve 123, the pressure of the wheel cylinder 115 is held at a constant. At the time of ABS operation, pressure reducing operation and pressure amplifying operation are repeated a predetermined amount of time and/or a predetermined number of times that have been determined beforehand.

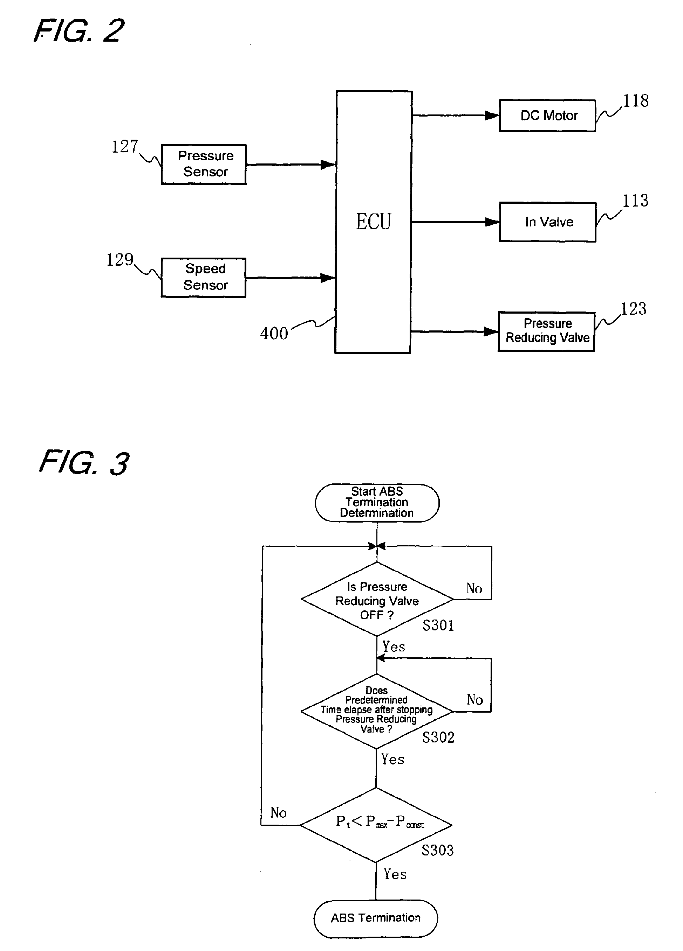

In this conventional hydraulic circuit, the ECU does not detect the actual release of the brake lever 101 and does not terminate the ABS at the correct timing. For that reason, in a case where, during operation of the ABS, the hydraulic circuit is in the middle of pressure amplifying operation at a point in time when the rider releases the brake lever 101 (arrow 201 in FIG. 7(a)) and then again grips the brake lever 101 (arrow 202 in FIG. 2(a)) in a relatively short amount of time, the in valve 113 opens and closes in units of several hundred milliseconds and repeats pressure amplification and holding, so the pressure of the master cylinder 103 that has risen as a result of operation of the brake lever 101 is not sufficiently transmitted to the wheel cylinder 115, whereby the rider feels operation of the brake lever 101 to be stiff and experiences a sense of discomfort. This is because the transmission of the brake fluid from the master cylinder 103 to the wheel cylinder 115 is insufficient because the pressure of the wheel cylinder 115 is being actively amplified.

In patent document 1, there is proposed a control method that, in an ABS for a two-wheeled motor vehicle, indirectly detects release of the brake lever and shortens the operating time of the ABS. The control method described in patent document 1 estimates brake release and terminates ABS control when a hydraulic sensor detects a drop in the hydraulic pressure of a brake caliper cylinder (wheel cylinder). In this brake control method, in a case where the brake caliper cylinder is in a pressure-reduced state and the brake hydraulic pressure is smaller than a predetermined value during ABS control, the method judges that the brake has been released.

Patent Document 1: JP-A-5-105065

DISCLOSURE OF THE INVENTION

PROBLEMS TO BE SOLVED BY THE INVENTION

Patent document 1 does not actively amplify the hydraulic pressure of the wheel cylinder during operation of the ABS, and, differently from the circuit configuration of the conventional example in FIG. 6, is not equipped with a pressure reducing valve or a hydraulic pump for pressure amplification, so it is difficult to apply the invention of patent document 1 to the conventional example in FIG. 6.

Thus, it is an object of the present invention to provide a brake control device for a two-wheeled motor vehicle equipped with an ABS that can more appropriately estimate release of the brake lever and stop the ABS when detecting the hydraulic pressure of the wheel cylinder and determining release of the brake lever.

Moreover, in a two-wheeled motor vehicle, the way that the rider releases the brake lever that is operated by the hand of the rider varies depending on the rider, such as smoothly releasing the brake lever or abruptly releasing the brake lever. Consequently, it is also an object of the present invention to provide a brake control device for a two-wheeled motor vehicle equipped with an ABS that can estimate smooth release of the brake lever by the rider and prepare for release of the brake lever beforehand.

MEANS FOR SOLVING THE PROBLEMS

A brake control device for a two-wheeled motor vehicle of the present invention solves the above-described problem, and a first aspect of the invention is a brake control device for a two-wheeled motor vehicle comprising: a brake lever; a master cylinder that is connected to the brake lever; a wheel cylinder to which the pressure of the master cylinder is transmitted; a brake that is actuated by the wheel cylinder and brakes a wheel; a wheel speed sensor that detects the speed of the wheel; a hydraulic unit that is disposed between the master cylinder and the wheel cylinder; and control means that actuates, on the basis of the wheel speed that the wheel speed sensor has detected, the hydraulic unit at a time when there is a tendency for the wheel to lock, wherein the brake control device further comprises a pressure sensor that detects the pressure of the wheel cylinder, and in a case where the control means does not ease up on the wheel cylinder pressure during operation of the hydraulic unit and the pressure detected by the pressure sensor has dropped to a predetermined value at a time when a predetermined amount of time has elapsed in a state where the control means is not easing up on the wheel cylinder pressure, the control means terminates operation of the hydraulic unit.

A second aspect of the invention is the brake control device for a two-wheeled motor vehicle pertaining to the first aspect of the invention, wherein the hydraulic unit comprises a hydraulic pump, an in valve that amplifies the pressure of the wheel cylinder by operation of the hydraulic pump, and a pressure reducing valve that reduces the pressure of the wheel cylinder.

A third aspect of the invention is the brake control device for a two-wheeled motor vehicle pertaining to the second aspect of the invention, wherein in a case where the pressure reducing valve is closed during operation of an antilock brake and the pressure detected by the pressure sensor has dropped to the predetermined value at a time when a predetermined amount of time has elapsed in a state where the pressure reducing valve is closed, the control means terminates operation of the hydraulic unit.

A fourth invention is the brake control device for a two-wheeled motor vehicle pertaining to any of the first to third inventions, wherein the case where the pressure detected by the pressure sensor has dropped to the predetermined value is a case that satisfies Expression 1 below, with Expression 1 being expressed as:

$$P_t < P_{max} - P_{const}$$

where, $P_t$ is the pressure of the wheel cylinder that the pressure sensor has detected at a time of determination, $P_{max}$ is a maximum pressure value at a predetermined amount of time immediately before the time of determination during operation of the hydraulic unit, and $P_{const}$ is a value that has been determined beforehand.

A fifth invention is a brake control device for a two-wheeled motor vehicle comprising: a brake lever; a master cylinder that is connected to the brake lever; a wheel cylinder to which the pressure of the master cylinder is transmitted; a brake that is actuated by the wheel cylinder and brakes a wheel; a wheel speed sensor that detects the speed of the wheel; a hydraulic unit that is disposed between the master cylinder and the wheel cylinder; and control means that actuates, on the basis of the wheel speed that the wheel speed sensor has detected, the hydraulic unit at a time when there is a tendency for the wheel to lock, wherein the brake control device further comprises a pressure sensor that detects the pressure of the wheel cylinder, and in a case where the control means does not ease up on the wheel cylinder pressure during operation of the hydraulic unit and the pressure detected by the pressure sensor has dropped to a predetermined value at a time when a predetermined amount of time has elapsed in a state where the control means is not easing up on the wheel cylinder pressure, the control means controls the hydraulic unit so as to enlarge the transmission of hydraulic pressure between the master cylinder and the wheel cylinder.

A sixth invention is the brake control device for a two-wheeled motor vehicle pertaining to the fifth invention, wherein the hydraulic unit comprises a hydraulic pump, an in valve that amplifies the pressure of the wheel cylinder by operation of the hydraulic pump, and a pressure reducing valve that reduces the pressure of the wheel cylinder.

A seventh invention is the brake control device for a two-wheeled motor vehicle pertaining to the sixth invention, wherein in a case where the pressure reducing valve is closed during operation of an antilock brake and the pressure detected by the pressure sensor has dropped to the predetermined value at a time when a predetermined amount of time has elapsed in a state where the pressure reducing valve is closed, the control means controls the in valve such that the opening of the in valve becomes larger.

An eighth invention is the brake control device for a two-wheeled motor vehicle pertaining to the seventh invention, wherein the control means enlarges the opening of the in valve by changing a duty ratio for opening and closing the in valve.

A ninth invention is the brake control device for a two-wheeled motor vehicle pertaining to the eighth invention, wherein the control means terminates operation of the hydraulic unit after a predetermined amount of time has elapsed after the control means changes the in valve such that the opening of the in valve becomes larger.

A tenth invention is the brake control device for a two-wheeled motor vehicle pertaining to any of the first to ninth inventions, wherein the case where the pressure detected by the pressure sensor has dropped to the predetermined value is a case that satisfies Expression 2 below, with Expression 2 being expressed as:

$$P_t < P_{max} - P'_{const}$$

where, $P_t$ is the pressure of the wheel cylinder that the pressure sensor has detected at a time of determination, $P_{max}$ is a maximum pressure value at a predetermined amount of time immediately before the time of determination during operation of the hydraulic unit, and $P'_{const}$ is a value that has been determined beforehand.

ADVANTAGES OF THE INVENTION

The brake control device for a two-wheeled motor vehicle of the present invention is configured as described above, so according to the invention pertaining to claim 1, the brake control device for a two-wheeled motor vehicle equipped with the hydraulic unit that performs active pressure amplification can more appropriately estimate release of the brake lever and stop the hydraulic unit when detecting the hydraulic pressure of the wheel cylinder and determining release of the brake lever, so when the rider releases the brake lever during operation of the hydraulic unit and then again grips the brake lever, the rider no longer feels that operation of the brake lever is stiff, and the fear that the rider will experience a sense of discomfort in operation can be lowered.

Further, according to the invention pertaining to claim 5, the brake control device estimates smooth release of the brake lever by the rider and enlarges the transmission of hydraulic pressure in preparation for release of the brake lever beforehand, so when the rider releases the brake lever during operation of the hydraulic unit and then again grips the brake lever, the rider no longer feels that operation of the brake lever is stiff, and the possibility that the rider will experience a sense of discomfort in operation can be lowered.

BRIEF DESCRIPTION OF THE DRAWINGS

FIG. 1 is a hydraulic circuit diagram pertaining to a brake control device of the present invention.
FIG. 2 is a block diagram pertaining to the brake control device of the present invention.
FIG. 3 is a flowchart pertaining to a first embodiment of the brake control device of the present invention.
FIG. 4 is a diagram showing changes over time in the grip pressure of a brake handle at the time of brake release.
FIG. 5 is a flowchart pertaining to a second embodiment of the brake control device of the present invention.
FIG. 6 is a front wheel hydraulic circuit diagram pertaining to a conventional brake control device.
FIG. 7 is a diagram showing states of each device at the time of conventional ABS operation.

EXPLANATION OF THE REFERENCE NUMERALS

| 100 | Hydraulic Unit |
| 101 | Brake Lever |
| 103 | Master Cylinder |
| 113 | In Valve |
| 115 | Wheel Cylinder |
| 123 | Pressure Reducing Valve |
| 119 | Hydraulic Pump |
| 118 | DC Motor |
| 125 | Reservoir |
| 127 | Pressure Sensor |
| 129 | Speed Sensor |

BEST MODES FOR CARRYING OUT THE INVENTION

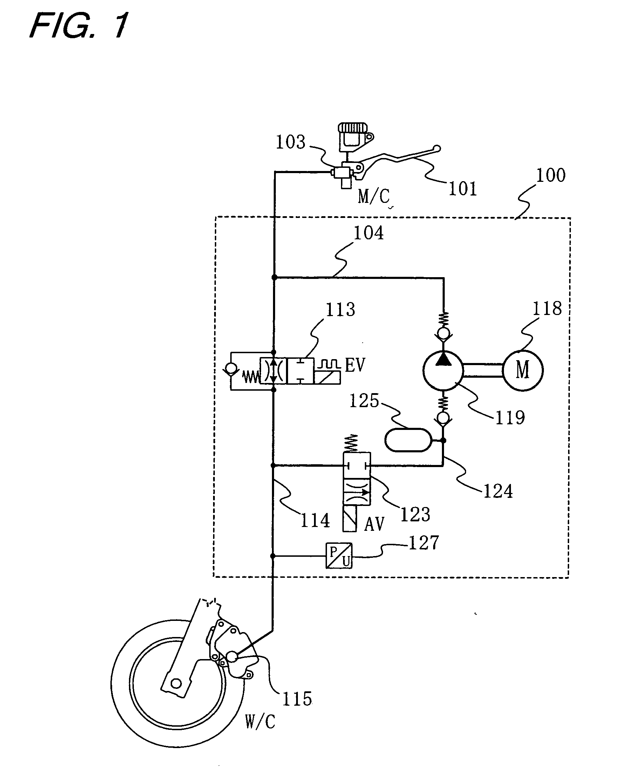

Embodiments pertaining to a brake control device for a two-wheeled motor vehicle of the present invention will be described with reference to FIG. 1 to FIG. 5.

(First Embodiment)

FIG. 1 shows a front wheel hydraulic circuit pertaining to a first embodiment. Description will be omitted in regard to devices in FIG. 1 that are the same as the devices shown in FIG. 6. The hydraulic circuit in FIG. 1 is basically the same as the hydraulic circuit shown in FIG. 6 but is different in that a pressure sensor 127 is disposed in the conduit 114 in order to detect the pressure of the wheel cylinder 115. The pressure sensor 127 shown in FIG. 1 is shown as being disposed in the conduit 114 inside the hydraulic unit 100, but the pressure sensor 127 is not limited to this arrangement; it suffices as long as the pressure sensor 127 is connected to the conduit 114, and the pressure sensor 127 can also be disposed in the wheel cylinder 115, for example.
FIG. 2 shows a block diagram for controlling the hydraulic circuit in FIG. 1. An ECU 400 receives a pressure signal from the pressure sensor 127 and a speed signal from a speed sensor 129. Further, the ECU 400 actuates the hydraulic pump 119 via the DC motor 118 and also controls the opening and closing of the normally open in valve 113 and the normally closed pressure reducing valve 123, that is, the ECU 400 actuates the hydraulic unit 100.
Next, operation of the front wheel hydraulic circuit at the time of operation of the hydraulic unit 100 will be described. The state of each of the valves 113 and 127 shown in FIG. 1 represents a state where the rider is not operating the brake lever.
In a case where the ECU 400 detects a predetermined skidding of the front wheel based on the speed signal of the front wheel speed sensor 129 at a time when the front wheel is being braked by operation of the brake lever 101, the hydraulic unit 100 is actuated.
In this case, the ECU 400 closes the in valve 113, opens the pressure reducing valve 123 and allows the hydraulic pressure of the wheel cylinder 115 to escape to the reservoir 125 to thereby lower the hydraulic pressure of the wheel cylinder 115 and avoid front wheel lock. Next, the ECU 400 performs pressure reducing operation and pressure amplifying operation several times as shown in FIG. 7(c). During this pressure amplifying operation, the ECU 400 repeats amplification and holding of the pressure of the wheel cylinder 115. At the time of pressure amplification, the ECU 400 opens the in valve 113, closes the pressure reducing valve 123 and actuates the hydraulic pump 119 to thereby suck out brake fluid from the reservoir 125 and send the brake fluid to the wheel cylinder 115 via the conduit 104, the opened in valve 113 and the conduit 114. At the time of holding, the ECU closes both the in valve 113 and the pressure reducing valve 123 and holds the wheel cylinder pressure at a constant. Additionally, the ECU 400 opens and closes the in valve 113 by pulse width modulation (PWM) control or ON/OFF control at the time of operation of the hydraulic unit 100 and repeats pressure reducing operation and pressure amplifying operation until later-mentioned conditions are satisfied.

In the first embodiment, the hydraulic circuit 100 shown in FIG. 1 detects the pressure of the wheel cylinder 115 with the pressure sensor 127 and guesses the timing of release of the brake lever 101.

There are two reasons why the pressure of the wheel cylinder 115 drops: the first is pressure reduction resulting from the hydraulic unit 100 and the second is release of the brake lever 101. Consequently, by distinguishing between pressure reduction resulting from the hydraulic unit 100 and pressure reduction resulting from release of the brake lever 101, the brake control device detects release of the brake lever 101.

Specifically, in a case where all of (1), (2) and (3) below are satisfied, the ECU 400 determines release of the brake lever 101 and terminates the hydraulic unit 100.

(1) The ECU 400 is not easing up on the hydraulic pressure of the wheel cylinder 115, that is, the pressure reducing valve 123 is stopped (the pressure reducing valve 123 is not open).

(2) A predetermined amount of time has elapsed after stopping the pressure reducing valve 123.

(3) The pressure of the wheel cylinder 115 has dropped to a later-mentioned predetermined value.

Operation based on these conditions will be described on the basis of the flowchart in FIG. 3. The ECU 400 starts an ABS termination determination mode during operation of the hydraulic unit 100. In step S301, the ECU 400 determines whether the pressure reducing valve 123 is stopped (closed). In a case where the pressure reducing valve 123 is stopped, the ECU 400 moves to step S302, and in a case where the pressure reducing valve 123 is not stopped, the ECU 400 repeats step S301.

In step S302, it is determined whether or not a predetermined amount of time has elapsed after stopping of the pressure reducing valve 123. In a case where the predetermined amount of time has elapsed, the ECU 400 moves to step S303, and in a case where the predetermined amount of time has not elapsed, the ECU 400 returns to step S302. This predetermined amount of time can, for example, be about several hundred milliseconds or the amount of time it takes to repeat pressure reduction and pressure amplification shown in FIG. 7 about 10 times.

In step S303, the ECU 400 determines whether or not the pressure of the wheel cylinder 115 that the pressure sensor 127 has detected satisfies Expression 1 below.

$$\text{Expression 1: } P_t < P_{max} - P_{const}$$

Here, $P_t$ is the actual pressure of the wheel cylinder 115 that the pressure sensor 127 has detected at a time of determination, $P_{max}$ is a maximum pressure value at a predetermined amount of time (e.g., 1 second) immediately before the time of determination during ABS operation, and $P_{const}$ is a value that has been determined beforehand, about 5 bar, for example, but this value fluctuates on the basis of vehicle type, laden weight and speed, and values that have been recorded in a ROM or the like of the ECU 400 beforehand are used in correspondence to various conditions.

Then, in step S303, in a case where the condition of Expression 1 is satisfied, the ECU 400 terminates the hydraulic circuit 100, and in a case where the condition of Expression 1 is not satisfied, the ECU 400 returns to step S301. At the time of termination of the hydraulic circuit 100, the ECU 400 stops and completely opens the in valve 113, stops and closes the pressure reducing valve 123, stops the DC motor 118 and stops operation of the hydraulic pump 119.

In this manner, in the first embodiment, the brake control device for a two-wheeled motor vehicle equipped with the hydraulic unit 100 can more appropriately estimate release of the brake lever 101 and stop the hydraulic unit 100 when detecting the hydraulic pressure of the wheel cylinder 115 and determining release of the brake lever 101, so when the rider releases the brake lever 101 during operation of the hydraulic circuit 100 and then again grips the brake lever 101, the rider no longer feels that operation of the brake lever 101 is stiff and can experience a natural operation feeling without feeling a sense of discomfort in operation.

(Second Embodiment)

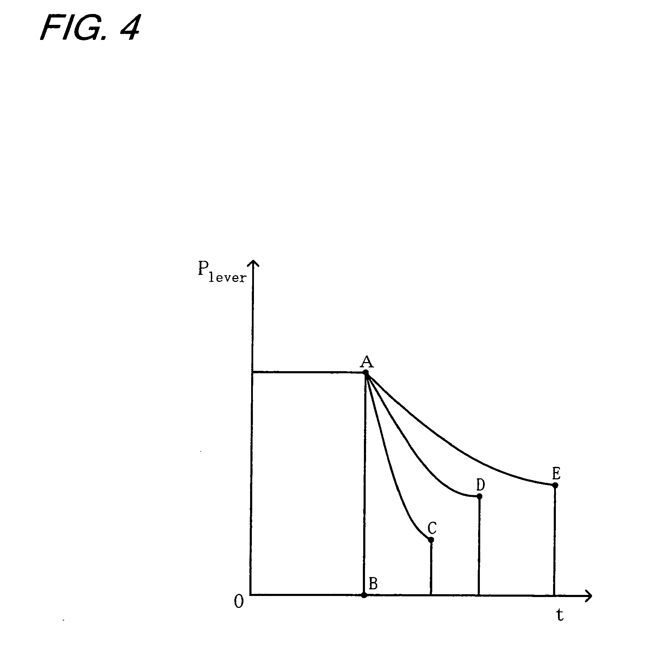

The way that the rider releases the brake lever is, as shown in FIG. 4, varied, and there are cases where the ECU 400 cannot determine this by the flowchart that has been described in FIG. 3. A second embodiment that can be applied to such a case will be described. The hydraulic circuit and the block used in the second embodiment are the same as those shown in FIG. 1 and FIG. 2, so description of these will be omitted.

FIG. 4 is a diagram hypothetically showing changes in the pressure with which the rider grips the brake lever with respect to time. Point A in FIG. 4 is a point when the rider begins to release the brake lever. The following cases are conceivable as ways that the rider releases the brake lever: (1) a case where the rider abruptly releases the brake lever at point A and moves to point B; (2) a case where the rider relatively suddenly eases up on the brake lever from point A to point C and then completely releases the brake lever at point C; (3) a case where the rider relatively smoothly eases up on the brake lever from point A to point D and then completely releases the brake lever at point D; and (4) a case where the rider smoothly eases up on the brake lever from point A to point E and then completely releases the brake lever at point E. Particularly in the case where the rider moves from point A to point E, the fear arises that the ECU 400 will not be able to determine the timing of release of the brake lever 101 with the control of the first embodiment.

Thus, in the second embodiment, the ECU 400 judges that release is near when the pressure of the wheel cylinder 115 drops a certain extent even when the rider has not completely released the brake lever 101, changes the duty ratio of the opening and closing of the in valve 113, and strengthens pressure amplification of the in valve 113, that is, enlarges the opening of the in valve 113, to thereby makes it easier for the hydraulic pressure of the master cylinder 103 to escape to the wheel cylinder 115.

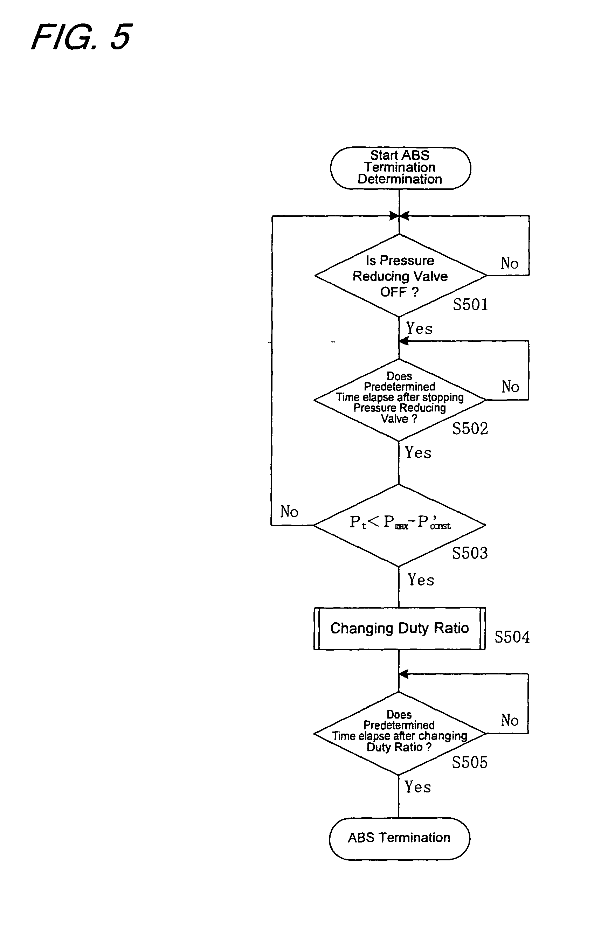

This operation will be described on the basis of the flowchart in FIG. 5. Steps S501 and S502 shown in FIG. 5 are operations that are respectively the same as steps S301 and S302 shown in FIG. 3. The ECU 400 starts the ABS termination determination mode during operation of the hydraulic unit 100. In step S501, the ECU 400 determines whether the pressure reducing valve 123 is stopped (closed). In a case where the pressure reducing valve 123 is stopped, the ECU 400 moves to step S502, and in a case where the pressure reducing valve 123 is not stopped, the ECU 400 repeats step S501.

In step S502, it is determined whether or not a predetermined amount of time has elapsed after stopping of the pressure reducing valve 123. In a case where the predetermined amount of time has elapsed, the ECU 400 moves to step S503, and in a case where the predetermined amount of time has not elapsed, the ECU 400 returns to step S502. In step S503, the ECU 400 determines whether or not the pressure of the wheel cylinder 115 that the pressure sensor 127 has detected satisfies Expression 2 below.

$$\textbf{Expression 2: } P_t < P_{max} - P'_{const}$$

Here, $P_t$ is the actual pressure of the wheel cylinder 115 that the pressure sensor 127 has detected at a time of determination, $P_{max}$ is a maximum pressure value at a predetermined amount of time (e.g., 1 second) immediately before the time of determination during ABS operation, and $P'_{const}$ is a value that has been determined beforehand and can be a value smaller than 5 bar, for example, but this value fluctuates on the basis of vehicle type, laden weight and speed, and values that have been recorded in a ROM or the like of the ECU 400 beforehand are used in correspondence to various conditions.

Then, in step S503, in a case where the condition of Expression 2 is satisfied, the ECU 400 moves to step S504, and in a case where the condition of Expression 2 is not satisfied, the ECU 400 returns to step S501. In step S504, the ECU 400 changes the duty ratio of the in valve 113. The duty ratio of the in valve 113 before step S504 is controlled such that the in valve 113 repeatedly opens for 10 msc, closes for 20 msc, opens for 10 msc, and closes for 20 msc, for example. With respect thereto, the duty ratio of the in valve 113 is changed in step S504 such that the in valve 113 repeatedly opens for 20 msc, closes for 10 msc, opens for 20 msc, and closes for 10 msc. By changing the duty ratio in this manner, the ECU 400 can strengthen the pressure amplification of the in valve 113 and raise its opening.

Then, after the ECU 400 has changed the duty ratio, in step S505, the ECU 400 determines whether or not a predetermined amount of time has elapsed after changing of the duty ratio. In a case where the predetermined amount of time has elapsed, the ECU 400 terminates the ABS. In a case where the predetermined amount of time has not elapsed, the ECU 400 repeats step S505. This predetermined amount of time can, for example, be about several hundred milliseconds or the amount of time it takes to repeat pressure reduction and pressure amplification shown in FIG. 7 about 10 times.

Further, instead of step S505, the ECU 400 may also perform control to terminate operation of the hydraulic unit 100 after repeating pressure amplification a predetermined number of times by the duty ratio after being changed.

In the second embodiment, at the time of ABS operation, the brake control device makes it easier for the hydraulic pressure of the master cylinder 103 to flow to the wheel cylinder 115 in order to prepare for release of the brake lever beforehand in a state from point A to point E shown in FIG. 4, that is, a state where the rider gradually eases up on the brake lever and then releases the brake, so that even if the rider again grips the brake lever 101 immediately after releasing the brake lever 101, the brake fluid escapes from the master cylinder 103, so it becomes difficult for the rider to experience a sense of discomfort where the rider feels that the gripping of the brake lever is stiff.

In the above-described first and second embodiments, the ECU 400 may also be integrated with the hydraulic unit 100. Further, the pressure amplifying operation was configured by pressure amplifying control and constant time holding but it may also be linear control that has throttle action.

**Claims**

1. A brake control device for a two-wheeled motor vehicle, comprising: a brake lever; a master cylinder that is connected to the brake lever; a wheel cylinder to which the pressure of the master cylinder is transmitted; a brake that is actuated by the wheel cylinder and brakes a wheel; a wheel speed sensor that detects the speed of the wheel; a hydraulic unit that is disposed between the master cylinder and the wheel cylinder; and control means that actuates, on the basis of the wheel speed that the wheel speed sensor has detected, the hydraulic unit at a time when there is a tendency for the wheel to lock,

   wherein the brake control device further comprises a pressure sensor that detects the pressure of the wheel cylinder, and

   wherein in the case where the control means does not ease up on the wheel cylinder pressure during operation of the hydraulic unit and the pressure detected by the pressure sensor has dropped to a predetermined value at a time when a predetermined amount of time has elapsed in a state where the control means is not easing up on the wheel cylinder pressure, the control means terminates operation of the hydraulic unit.

2. The brake control device for a two-wheeled motor vehicle according to claim 1, wherein the hydraulic unit comprises a hydraulic pump, an in valve that amplifies the pressure of the wheel cylinder by operation of the hydraulic pump, and a pressure reducing valve that reduces the pressure of the wheel cylinder.

3. The brake control device for a two-wheeled motor vehicle according to claim 2, wherein in a case where the pressure reducing valve is closed during operation of the antilock brake and the pressure detected by the pressure sensor has dropped to the predetermined value at a time when a predetermined amount of time has elapsed in a state where the pressure reducing valve is closed, the control means terminates operation of the hydraulic unit.

4. The brake control device for a two-wheeled motor vehicle according to any one of claims 1 to 3, wherein the case where the pressure detected by the pressure sensor has dropped to the predetermined value is a case that satisfies Expression 1 below, with Expression 1 being expressed as:

$$P_t < P_{max} - P_{const}$$

   where, $P_t$ is the pressure of the wheel cylinder that the pressure sensor has detected at a time of determination, $P_{max}$ is a maximum pressure value at a predetermined amount of time immediately before the time of determination during operation of the hydraulic unit, and $P_{const}$ is a value that has been determined beforehand.

5. A brake control device for a two-wheeled motor vehicle comprising: a brake lever; a master cylinder that is connected to the brake lever; a wheel cylinder to which the pressure of the master cylinder is transmitted; a brake that is actuated by the wheel cylinder and brakes a wheel; a wheel speed sensor that detects the speed of the wheel; a hydraulic unit that is disposed between the master cylinder and the wheel cylinder; and control means that actuates, on the basis of the wheel speed that the wheel speed sensor has detected, the hydraulic unit at a time when there is a tendency for the wheel to lock,

   wherein the brake control device further comprises a pressure sensor that detects the pressure of the wheel cylinder, and in a case where the control means does not ease up on the wheel cylinder pressure during operation of the hydraulic unit and the pressure detected by the pressure sensor has dropped to a predetermined value at a time when a predetermined amount of time has elapsed in a state where the control means is not easing up on the wheel cylinder pressure, the control means controls the hydraulic unit so as to enlarge the transmission of hydraulic pressure between the master cylinder and the wheel cylinder.

6. The brake control device for a two-wheeled motor vehicle according to claim 5, wherein the hydraulic unit comprises a hydraulic pump, an in valve that amplifies the pressure of the wheel cylinder by operation of the hydraulic pump, and a pressure reducing valve that reduces the pressure of the wheel cylinder.

**7.** The brake control device for a two-wheeled motor vehicle according to claim 6, wherein in a case where the pressure reducing valve is closed during operation of the antilock brake and the pressure detected by the pressure sensor has dropped to the predetermined value at a time when a predetermined amount of time has elapsed in a state where the pressure reducing valve is closed, the control means controls the in valve such that the opening of the in valve becomes larger.

**8.** The brake control device for a two-wheeled motor vehicle according to claim 7, wherein the control means enlarges the opening of the in valve by changing a duty ratio for opening and closing the in valve.

**9.** The brake control device for a two-wheeled motor vehicle according to claim 8, wherein the control means terminates operation of the hydraulic unit after a predetermined amount of time has elapsed after the control means changes the in valve such that the opening of the in valve becomes larger.

**10.** The brake control device for a two-wheeled motor vehicle according to any one of claims 5 to 9, wherein the case where the pressure detected by the pressure sensor has dropped to the predetermined value is a case that satisfies Expression 2 below, with Expression 2 being expressed as:

$$P_t < P_{max} - P'_{const}$$

where, $P_t$ is the pressure of the wheel cylinder that the pressure sensor has detected at a time of determination, $P_{max}$ is a maximum pressure value at a predetermined amount of time immediately before the time of determination during operation of the hydraulic unit, and $P'_{const}$ is a value that has been determined beforehand.

*FIG. 1*

## FIG. 2

Pressure Sensor 127 → ECU

Speed Sensor 129 → ECU

ECU 400

ECU → DC Motor 118

ECU → In Valve 113

ECU → Pressure Reducing Valve 123

## FIG. 3

Start ABS Termination Determination

Is Pressure Reducing Valve OFF ? — S301 — No

Yes

Does Predetermined Time elapse after stopping Pressure Reducing Valve ? — S302 — No

Yes

$P_t < P_{max} - P_{const}$ — S303 — No

Yes

ABS Termination

11

*FIG. 4*

# FIG. 5

```
        ┌──────────────────┐
        │   Start ABS      │
        │  Termination     │
        │  Determination   │
        └──────────────────┘
                 │
                 ▼
         ╱╲
        ╱   ╲        Is Pressure        No
       ╱     ╲   Reducing Valve   ──────────┐
       ╲     ╱       OFF ?                   │
        ╲   ╱         S501                   │
         ╲╱                                  │
          │ Yes                              │
          ▼                                  │
         ╱╲                                  │
        ╱   ╲        Does                    │
       ╱     ╲   Predetermined        No     │
       ╲     ╱ Time elapse after stopping ───┤
        ╲   ╱  Pressure Reducing             │
         ╲╱       Valve ?   S502             │
          │ Yes                              │
          ▼                                  │
   No    ╱╲                                  │
  ┌──── ╱   ╲                                │
  │    ╱     ╲   Pt < Pmax - P'const         │
  │    ╲     ╱                               │
  │     ╲   ╱       S503                     │
  │      ╲╱                                  │
  │       │ Yes                              │
  │       ▼                                  │
  │  ┌──────────────────┐                    │
  │  ║ Changing Duty Ratio ║  S504           │
  │  └──────────────────┘                    │
  │       │                                  │
  │       ▼                                  │
  │      ╱╲                                  │
  │     ╱   ╲      Does               No     │
  │    ╱     ╲  Predetermined  ──────────────┘
  │    ╲     ╱ Time elapse after changing
  │     ╲   ╱    Duty Ratio ?
  │      ╲╱        S505
  │       │ Yes
  │       ▼
  │  ┌──────────────────┐
  │  │  ABS Termination │
  │  └──────────────────┘
```

$P_t < P_{max} - P'_{const}$

## FIG. 6

# FIG. 7

(a) Brake Lever ON OFF

(b) Master Cylinder Pressure

(c) Wheel Cylinder Pressure

ABS Operation

Pressure Reducing

Pressure Amplifying

(d) In Valve Close Open

201 202

<table>
<tr><td colspan="2" align="center">**INTERNATIONAL SEARCH REPORT**</td><td>International application No.<br>PCT/JP2008/052100</td></tr>
</table>

**A. CLASSIFICATION OF SUBJECT MATTER**
*B60T8/1761*(2006.01)i

According to International Patent Classification (IPC) or to both national classification and IPC

**B. FIELDS SEARCHED**

Minimum documentation searched (classification system followed by classification symbols)
B60T8/1761

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 5-105065 A  (Honda Motor Co., Ltd.),<br>27 April, 1993 (27.04.93),<br>Par. Nos. [0005], [0006], [0021] to [0023]<br>(Family: none) | 1,4-5,10<br>2-3,6-9 |
| Y | JP 2003-25978 A  (Kabushiki Kaisha Bosshu Otomotibu),<br>29 January, 2003 (29.01.03),<br>Fig. 1; 'fluid pressure pump 30',<br>'electromagnetic selector valves 13, 23',<br>'electromagnetic selector valves 14, 24'<br>& US 2003/0015916 A1<br>Fig. 1<br>& EP 1277635 A2 | 2-3,6-9 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   22 April, 2008 (22.04.08) | Date of mailing of the international search report<br>   13 May, 2008 (13.05.08) |
| Name and mailing address of the ISA/<br>   Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5105065 A